# EUROPÄISCHE PATENTSCHRIFT

(11) **EP 3 781 371 B1**
(45) Veröffentlichungstag und Bekanntmachung des Hinweises auf die Patenterteilung: **05.01.2022**
(21) Anmeldenummer: 19718310.6
(22) Anmeldetag: 12.04.2019
(51) Int. Cl.: B25J 19/00, F16C 11/06, F16M 11/12

(54) **BEFESTIGUNGSVORRICHTUNG UND ROBOTERARM MIT EINER SOLCHEN BEFESTIGUNGSVORRICHTUNG**
FASTENING DEVICE AND ROBOT ARM HAVING SUCH A FASTENING DEVICE
DISPOSITIF DE FIXATION ET BRAS ROBOTISÉ DOTÉ D'UN TEL DISPOSITIF DE FIXATION

(30) Priorität: 20.04.2018 DE 102018206063
(43) Veröffentlichungstag der Anmeldung: 24.02.2021
(73) Patentinhaber: KUKA Deutschland GmbH, 86165 Augsburg (DE)
(72) Erfinder: KARLINGER, Stefan, 86199 Augsburg (DE)
(74) Vertreter: Tillmann, Axel
(86) Internationale Anmeldenummer: PCT/EP2019/059425
(87) Internationale Veröffentlichungsnummer: WO 2019/201774

(56) Entgegenhaltungen:
- DE-A1- 3 137 780
- DE-A1- 10 211 212
- DE-A1-102004 036 643
- FR-A1- 2 570 774
- GB-A- 2 333 125

## Beschreibung

Die Erfindung betrifft eine Befestigungsvorrichtung für eine Leitungsführungsvorrichtung, die einen Aufnahmeraum aufweist, in dem ein Leitungsabschnitt in einer Auszugsrichtung ausziehbar gelagert ist, zur Lagerung der Leitungsführungsvorrichtung an einem Roboterarm mit mehreren Gliedern und die Glieder gegeneinander verstellenden Gelenken. Die Erfindung betrifft außerdem einen Roboterarm mit einer solchen Befestigungsvorrichtung.

Aus der DE 10 2015 210 570 A1 ist eine Leitungsführungsvorrichtung bekannt. In einer der dortigen Ausführungen ist das Gehäuse der Leitungsführungsvorrichtung um eine einzige Drehachse frei hin- und her schwenkbar, um eine Verstellvorrichtung zu bilden. Eine Befestigungsvorrichtung wird in diesem Fall von einer Basis eines Drehgelenks gebildet, welches das Gehäuse hin- und her schwenkbar an dem Roboterarm lagert.

Aus der DE 102 11 212 A1 ist eine Roboterleitungsführungsvorrichtung für wenigstens eine Leitung bekannt, die in einem biegsamen Wellrohr geführt ist, welches an seinem Umfang eine Vielzahl zueinander beabstandeter Rillen aufweist, mit einem wenigstens zweiteiligen Halteelement, das eine Leitungsführungsausnehmung umfasst und das an seiner zu der Leitungsführungsausnehmung gewandten Innenseite wenigstens ein quer zu einer Mittelachse ausgerichtetes Arretierungselement aufweist. Die Roboterleitungsführungsvorrichtung der DE 102 11 212 A1 besteht aus wenigstens einem in die Leitungsführungsausnehmung einsetzbaren biegsamen Hüllrohrelement, das das Wellrohr umfasst und das wenigstens eine Ausnehmung aufweist, durch die das wenigstens eine Arretierungselement hindurch greift, wobei sich das Arretierungselement radial so weit von dem inneren Umfang des Halteelements aus zur Mittelachse hin erstreckt, dass es durch die Ausnehmung hindurch bis in eine Rille des Wellrohrs eingreift. Das Wellrohr wird mit dieser Roboterleitungsführungsvorrichtung axial festgelegt, ist aber frei drehbar.

Aufgabe der Erfindung ist es, eine Befestigungsvorrichtung für eine Leitungsführungsvorrichtung an einem Roboterarm zu schaffen, und einen zughörigen Roboterarm mit einer solchen Leitungsführungsvorrichtung zu schaffen, wodurch die Leitungsführungsvorrichtung noch besser gelagert ist, um einen Verschleiß an der Leitungsführungsvorrichtung weiter zu verringern.

Diese Aufgabe wird erfindungsgemäß gelöst durch eine Befestigungsvorrichtung für eine Leitungsführungsvorrichtung mit den Merkmalen des Anspruch 1 und einen Roboterarm mit den Merkmalen des Anspruchs 10.

Es ist eine Befestigungsvorrichtung für eine Leitungsführungsvorrichtung, die einen Aufnahmeraum aufweist, in dem ein Leitungsabschnitt in einer Auszugsrichtung ausziehbar gelagert ist, zur Lagerung der Leitungsführungsvorrichtung an einem Roboterarm mit mehreren Gliedern und die Glieder gegeneinander verstellenden Gelenken, umfassend:
- einen ersten Anschlusskörper, der ausgebildet ist, zum starren Verbinden des ersten Anschlusskörpers der Befestigungsvorrichtung mit einer Leitungsführungsvorrichtung,
- einen zweiten Anschlusskörper, der ausgebildet ist, zum starren Verbinden des zweiten Anschlusskörpers der Befestigungsvorrichtung mit einem Glied eines Roboterarms, und
- ein Gelenk, das ausgebildet ist, den zweiten Anschlusskörper relativ zum ersten Anschlusskörper in zwei verschiedenen, jeweils senkrecht zur Auszugsrichtung orientierten Drehfreiheitsgraden beweglich zu lagern.

Erfindungsgemäß weist der erste Anschlusskörper eine auf den zweiten Anschlusskörper zuweisende erste Sitzfläche auf und der zweite Anschlusskörper weist dabei eine auf den ersten Anschlusskörper zuweisende zweite Sitzfläche auf, wobei die erste Sitzfläche des ersten Anschlusskörpers zwei zueinander in einem Winkel angestellte erste Teilsitzflächen aufweist und/oder die zweite Sitzfläche des zweiten Anschlusskörpers zwei zueinander in einem Winkel angestellte zweite Teilsitzflächen aufweist, derart, dass die aufeinander abkippende erste Sitzfläche und zweite Sitzfläche einen der beiden Drehfreiheitsgrade bestimmt.

Die ersten Teilsitzflächen des ersten Anschlusskörpers bilden somit einen dachartigen First einer Oberseite des ersten Anschlusskörpers. Die zweiten Teilsitzflächen des zweiten Anschlusskörpers bilden somit einen entsprechenden dachartigen First einer Unterseite des zweiten Anschlusskörpers. Die Firstkante der Oberseite des ersten Anschlusskörpers ist insbesondere durch die Auflageflächen abgeflacht. Im Zusammenbau steht die Firstkante des zweiten Anschlusskörpers linienberührend auf den Auflageflächen des ersten Anschlusskörpers auf, so dass eine Verbindung in Art eines Kippscharniers gebildet wird. Der jeweilige dachartige First bildet insoweit fasenförmige Abflachungen jeweils der Oberseite des ersten Anschlusskörpers bzw. der Unterseite des zweiten Anschlusskörpers.

Die Leitungsführungsvorrichtung dient dazu einen Längenausgleich zu ermöglichen, so dass während einer Bewegung des Roboterarms eine Versorgungsleitung möglichst konturnah an den Gliedern und Gelenken des Roboterarms entlang geführt werden kann. Die Leitungsführungsvorrichtung weist dazu im Allgemeinen einen Aufnahmeraum auf, in dem ein Leitungsabschnitt der Versorgungsleitung gespeichert ist, derart, dass in Abhängigkeit der Bewegung des Roboterarms und somit in Abhängigkeit der Bewegung eines insbesondere an einem Flansch des Roboterarms angebrachten, freien Endabschnitts der Versorgungsleitung, der im Aufnahmeraum der Leitungsführungsvorrichtung gespeicherte Leitungsabschnitt herausgezogen oder wieder hineingezogen wird. Die Versorgungsleitung kann dazu federvorgespannt in dem Aufnahmeraum der Leitungsführungsvorrichtung gelagert sein.

Unter einer Versorgungsleitung wird insbesondere eine Energieleitung und/oder eine Energiezuführung verstanden, die Leitungen, wie beispielsweise elektrische Leitungen, Kalt- und/oder Warmwasserleitungen, Fluid- und/oder Druckleitungen zu Werkzeugen, die an dem Roboterarm angeflanscht sind, aufweisen kann. Die Versorgungsleitung, insbesondere die Energieleitung und/oder die Energiezuführung kann in Einzelsträngen oder in Kabelbündel zusammengefasst und insbesondere mit einem oder mehreren flexiblen Schutzschläuchen, wie beispielsweise Wellschläuchen ummantelt sein.

Aufgrund der umfangreichen Bewegungsfreiheit des Flansches des Roboterarms während einer Bewegung des Roboterarms und aufgrund der möglichen hohen Dynamik der Bewegung, wird der ausziehbare Leitungsabschnitt hohen mechanischen Belastungen ausgesetzt. Insbesondere im Bereich eines Austritts des Leitungsabschnitts aus dem Aufnahmeraum der Leitungsführungsvorrichtung wird der Leitungsabschnitt mitunter an Rändern des Austritts entlanggeschleift und zwar auch unter hohen Biegewinkeln, wenn die Leitungsführungsvorrichtung und insbesondere deren Aufnahmeraum starr an dem Roboterarm befestigt ist.

Mit der erfindungsgemäßen Befestigungsvorrichtung kann die komplette Leitungsführungsvorrichtung in gewissem Umfang der Auszugsbewegung des Leitungsabschnitts folgen, so dass hohe Biegewinkel vermieden werden. Aufgrund der erfindungsgemäßen Befestigungsvorrichtung kann die Leitungsführungsvorrichtung und somit auch der Aufnahmeraum der Bewegung des Leitungsabschnitts nachgeführt werden, da sich die Leitungsführungsvorrichtung wegen der Zugkraft an dem Leitungsabschnitt selbsttätig in Zugrichtung ausrichtet und dadurch die Biegewinkel verkleinert. Indem das Gelenk der Befestigungsvorrichtung ausgebildet ist, den zweiten Anschlusskörper relativ zum ersten Anschlusskörper in zwei verschiedenen, jeweils senkrecht zur Auszugsrichtung orientierten Drehfreiheitsgraden beweglich zu lagern, kann die Leitungsführungsvorrichtung besonders gut dem ausgezogenen Leitungsabschnitt folgen. Dies verringert die Biegewinkel des Leitungsabschnitts im Austrittsbereich der Leitungsführungsvorrichtung und kann somit helfen, den Verschleiß der Versorgungsleitung zu reduzieren und die Lebensdauer der gesamten Leitungsführungsvorrichtung zu erhöhen.

Der erste Anschlusskörper und der zweite Anschlusskörper können beispielsweise aus Kunststoff, insbesondere aus einem hochfesten Kunststoff hergestellt sein. Der erste Anschlusskörper und der zweite Anschlusskörper können beispielsweise aus glasfaserverstärktem Polyamid (PA-GF) hergestellt sein.

Wenn der zweite Anschlusskörper starr mit einem Glied des Roboterarms verbunden ist, kann dies bedeuten, dass der zweite Anschlusskörper unmittelbar an dem Glied des Roboterarms befestigt ist. Wenn der zweite Anschlusskörper starr mit einem Glied des Roboterarms verbunden ist, kann dies aber auch bedeuten, dass der zweite Anschlusskörper über ein weiteres Verbindungsstück, ein weiteres Zwischenstück oder eine Tragplatte mittelbar mit dem Glied verbunden ist. Diese Verbindung kann ggf. auch eine gewisse Elastizität aufweisen. Entscheidend ist, dass mittels des zweiten Anschlusskörpers die Befestigungsvorrichtung und damit auch die Leitungsführungsvorrichtung bezüglich des gewünschten Gliedes des Roboterarms festgelegt ist, so dass die Leitungsführungsvorrichtung von diesem betreffenden Glied getragen und entsprechend mitbewegt wird, ohne ihre die Funktion der Leitungsführungsvorrichtung gewährleistende Anordnung zu verlieren.

Eine Lagerung, welche die in senkrecht zur Auszugsrichtung orientierten Drehfreiheitsgrade ermöglicht und die Leitungsführungsvorrichtung beweglich lagert, kann insbesondere eine Lagerung bedeuten, bei der die Leitungsführungsvorrichtung bezogen auf eine Grundstellung des Roboterarms, in der ein Ausleger des Roboterarms horizontal ausgerichtet ist, um eine vertikale Drehachse geschwenkt und um eine horizontale Drehachse gekippt werden kann.

Beispielsweise auf Grundlage eines kartesischen Koordinatensystems, das drei orthogonal zueinander ausgerichtete Achsen aufweist, können drei Drehachsen den Achsen des kartesischen Koordinatensystems entsprechen, wobei die eine Achse in Auszugsrichtung des Leitungsabschnitts ausgerichtet ist und die beiden Drehfreiheitsgrade des Gelenks der Befestigungsvorrichtung von den übrigen beiden Achsen des kartesischen Koordinatensystems gebildet werden. Diese beiden Drehfreiheitsgrade werden im Folgenden auch als eine Schwenkachse mit einem Schwenkwinkel und eine Kippachse mit einem Kippwinkel bezeichnet.

In einer ersten Ausführungsform kann der erste Anschlusskörper eine Kugelpfanne aufweisen und der zweite Anschlusskörper zur Bildung eines Kugelgelenks der Befestigungsvorrichtung dabei einen mit der Kugelpfanne des ersten Anschlusskörpers zusammenwirkenden Kugelabschnitt aufweisen.

In einer alternativen zweiten Ausführungsform kann der zweite Anschlusskörper eine Kugelpfanne aufweisen und der erste Anschlusskörper zur Bildung eines Kugelgelenks der Befestigungsvorrichtung dabei einen mit der Kugelpfanne des zweiten Anschlusskörpers zusammenwirkenden Kugelabschnitt aufweisen.

In beiden Ausführungsformen kann die Kugelpfanne eine Innenwand aufweisen, die mit einer Kulissenführung versehen ist und der Kugelabschnitt kann dabei eine Außenwand aufweisen, die mit einer in die Kulissenführung eingreifenden Gegenführung versehen ist, wobei die Kulissenführung und die Gegenführung ausgebildet sind, einen Schwenkwinkel oder einen Kippwinkel des Kugelgelenks zu begrenzen.

Die Kugelpfanne des einen Anschlusskörpers bildet in Zusammenwirken mit dem Kugelabschnitt des anderen Anschlusskörpers ein Kugelgelenk. Ein Kugelgelenk im Allgemeinen weist jedoch drei Drehfreiheitsgrade auf. Der eine Drehfreiheitsgrad ist bei der erfindungsgemäßen Befestigungsvorrichtung allerdings durch zwei an der Kugelpfanne oder zwei an dem Kugelabschnitt gegenüberliegende Auflageflächen, die jeweils zwischen den beiden Teilsitzfläche des jeweiligen Anschlusskörpers liegen, blockiert, indem die gegenüberliegenden Auflageflächen von Kugelpfanne oder Kugelabschnitt eine scharnierartige Blockierung des dritten Drehfreiheitsgrades bewirken. Die beiden übrigen Drehfreiheitsgrad sind vorzugsweise in ihren maximalen Drehbereichen, d.h. im maximalen Schwenkwinkel und im maximalen Kippwinkel eingeschränkt.

Die Kulissenführung der Kugelpfanne kann von einer nutförmigen Vertiefung gebildet werden, die sich bogenförmig in der Innenwand der Kugelpfanne erstreckt und die Gegenführung des Kugelabschnitts wird dabei von einem Nutvorsprung gebildet, der sich bogenförmig auf der Außenwand des Kugelabschnitts erstreckt.

Die nutförmige Vertiefung der Kugelpfanne in Zusammenwirken mit dem Nutvorsprung des Kugelabschnitts bewirkt eine Drehfreiheit des Kugelgelenks in einer Drehrichtung, wobei eine zweite Drehfreiheit des Kugelgelenks, die orthogonal dazu verläuft, nur begrenzt zugelassen ist. Die Beweglichkeit bzw. die Begrenzung der Beweglichkeit in diesem zweiten Drehfreiheitsgrad bestimmt sich aus einem verbleibenden Spalt zwischen dem Nutvorsprung des Kugelabschnitts und der nutförmigen Vertiefung der Kugelpfanne. Ein solcher Spalt ergibt sich durch unterschiedliche Breiten von Nutvorsprung und nutförmiger Vertiefung, wobei die Breite des Nutvorsprungs entsprechend kleiner ist, als die Breite der nutförmigen Vertiefung. In einer alternativen Ausführung kann die nutförmige Vertiefung in kinematischer Umkehr an dem Kugelabschnitt vorgesehen sein und der Nutvorsprung an der Kugelpfanne vorgesehen sein.

Eine Begrenzung des Schwenkwinkels oder des Kippwinkels der Kulissenführung relativ zur Gegenführung kann somit durch gegenüberliegende Seitenwände der Kulissenführung und der Gegenführung vorgegeben sein, indem die in die Kulissenführung eingreifende Gegenführung eine den Schwenkwinkel oder den Kippwinkel bestimmende, geringere Breite aufweist, als die Breite der Kulissenführung.

Eine Begrenzung des Schwenkwinkels oder des Kippwinkels der Kulissenführung relativ zur Gegenführung kann insbesondere auf einen Winkel von maximal 30 Grad, insbesondere maximal 25 Grad oder maximal 15 Grad eingestellt sein.

Eine Begrenzung des Schwenkwinkels oder des Kippwinkels der aufeinander abkippenden ersten Sitzfläche und zweiten Sitzfläche kann durch den Anstellungswinkel der ersten Teilsitzflächen des ersten Anschlusskörpers und/oder durch den Anstellungswinkel der zweiten Teilsitzflächen des zweiten Anschlusskörpers vorgegeben sein, indem die aufeinander abkippenden ersten Anschlusskörper und zweiten Anschlusskörper den maximalen Schwenkwinkel oder den maximalen Kippwinkel bestimmen.

Eine Begrenzung des Schwenkwinkels oder des Kippwinkels der aufeinander abkippenden ersten Sitzfläche und zweiten Sitzfläche kann insbesondere auf einen Winkel von maximal 30 Grad, insbesondere maximal 25 Grad oder maximal 15 Grad eingestellt sein.

Der erste Anschlusskörper kann mit dem zweiten Anschlusskörper mittels einer den ersten Anschlusskörper und den zweiten Anschlusskörper durchdringenden Schraube gelenkig verbunden und durch eine mit der Schraube zusammenwirkende Mutter gegen Auseinanderfallen gesichert sein.

Die Schraube hält den erste Anschlusskörper und den zweiten Anschlusskörper zusammen, so dass ein verbundenes Kugelgelenk auch dann gebildet werden kann, wenn die entsprechende Kugelpfanne des einen Anschlusskörpers und der entsprechende Kugelabschnitt des anderen Anschlusskörpers sich über weniger als eine Halbkugelgestalt erstrecken und somit nicht von sich aus formschlüssig zusammenwirken.

Die Mutter kann eine Kugelsitzfläche aufweisen, die demjenigen Anschlusskörper zugewandt ist, der den Kugelabschnitt aufweist.

Die Kugelsitzfläche der Mutter ermöglicht insoweit eine Bewegung des Anschlusskörpers, der den Kugelabschnitt aufweist, relativ zum anderen Anschlusskörper unter der Mutter hinweg.

Die Aufgabe wird außerdem gelöst durch einen Roboterarm, aufweisend mehrere Glieder und die Glieder gegeneinander verstellende Gelenke, sowie eine Leitungsführungsvorrichtung, die einen Aufnahmeraum aufweist, in dem ein Leitungsabschnitt einer Energiezuführungsleitung in einer Auszugsrichtung ausziehbar gelagert ist, zum Führen der Energiezuführungsleitung entlang mehrerer der Glieder des Roboterarms, wobei der Roboterarm eine Befestigungsvorrichtung aufweist, wie nach einer oder mehreren der beschriebenen Ausführungen, welche Befestigungsvorrichtung die Leitungsführungsvorrichtung, insbesondere ein Gehäuse der Leitungsführungsvorrichtung in zwei verschiedenen, jeweils senkrecht zur Auszugsrichtung des Leitungsabschnitts der Energiezuführungsleitung orientierten Drehfreiheitsgraden beweglich an einem Glied des Roboterarms lagert.

Die Befestigungsvorrichtung kann unmittelbar an einem Glied des Roboterarms montiert sein.

Alternativ kann die Befestigungsvorrichtung an einer auf einem der Glieder des Roboterarms befestigten Tragplatte montiert sein.

Ein konkretes Ausführungsbeispiel der Erfindung ist in der nachfolgenden Beschreibung unter Bezugnahme auf die beigefügten Figuren näher erläutert. Konkrete Merkmale dieses exemplarisches Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine Seitenansicht eines beispielhaften Roboterarms mit einer Leitungsführungsvorrichtung, die mittels einer erfindungsgemäßen Befestigungsvorrichtung gelagert ist;
- Fig. 2: eine Draufsicht auf den Roboterarm gemäß Fig. 1 mit der Leitungsführungsvorrichtung;
- Fig. 3: eine Explosionsdarstellung einer erfindungsgemäßen Befestigungsvorrichtung;
- Fig. 4: eine perspektivische Darstellung der Befestigungsvorrichtung gemäß Fig. 3 im Zusammenbau in einer Grundstellung; und
- Fig. 5: eine perspektivische Darstellung der Befestigungsvorrichtung gemäß Fig. 3 und Fig. 4 im Zusammenbau in einer in zwei Drehfreiheitsgraden verstellten Auslenkungsstellung.

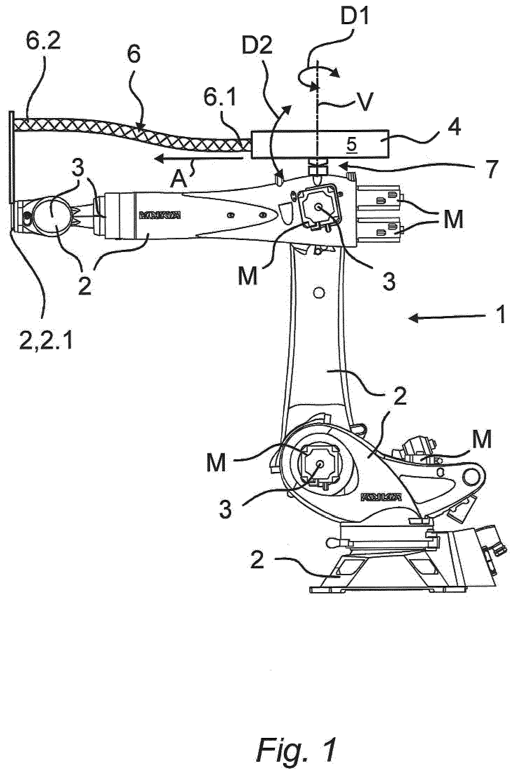

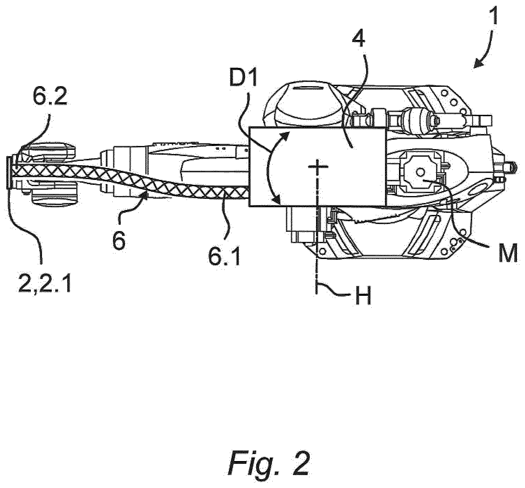

Im Falle des Ausführungsbeispiels der Fig. 1 und Fig. 2 weist der Roboterarm 1 mehrere Glieder 2 und die Glieder 2 gegeneinander verstellende Gelenke 3 auf. Jedes Gelenk 3 ist von jeweils einem Motor M des Roboterarms 1 angetrieben. Eine nicht näher gezeigte Robotersteuerung kann vorgesehen sein, die Motoren M anzusteuern, um die Glieder 2 des Roboterarms 1 durch automatisches Verstellen der Gelenke 3 zu bewegen. Im Falle des vorliegenden Ausführungsbeispiels sind alle Gelenke 3 des Roboterarms 1 als Drehgelenke ausgebildet. Jedes Drehgelenk ist um eine Drehachse drehbar. Der Roboterarm 1 trägt eine Leitungsführungsvorrichtung 4, die einen Aufnahmeraum 5 aufweist, in dem ein Leitungsabschnitt 6.1 einer Energiezuführungsleitung 6 in einer Auszugsrichtung A ausziehbar gelagert ist. Die Energiezuführungsleitung 6 weist ein Leitungsende 6.2 auf, das im Falle des vorliegenden Ausführungsbeispiels bezüglich eines Werkzeugflansches 2.1 festgelegt ist, der eines der Glieder 2 des Roboterarms 1 bildet.

Der Roboterarm 1 umfasst eine erfindungsgemäße Befestigungsvorrichtung 7, welche die Leitungsführungsvorrichtung 4 mit dem Roboterarm 1 gelenkig verbindet. Die Befestigungsvorrichtung 7 ist dabei ausgebildet, die Leitungsführungsvorrichtung 4 in zwei verschiedenen, jeweils senkrecht zur Auszugsrichtung A orientierten Drehfreiheitsgraden D1 und D2 beweglich zu lagern. Der erste Drehfreiheitsgrad D1 ermöglicht ein Schwenken der Leitungsführungsvorrichtung 4 um eine vertikale Achse V (Fig. 1). Der zweite Drehfreiheitsgrad D2 ermöglicht ein Kippen der Leitungsführungsvorrichtung 4 um eine in einer horizontalen Ebene liegende Kippachse H (Fig. 2).

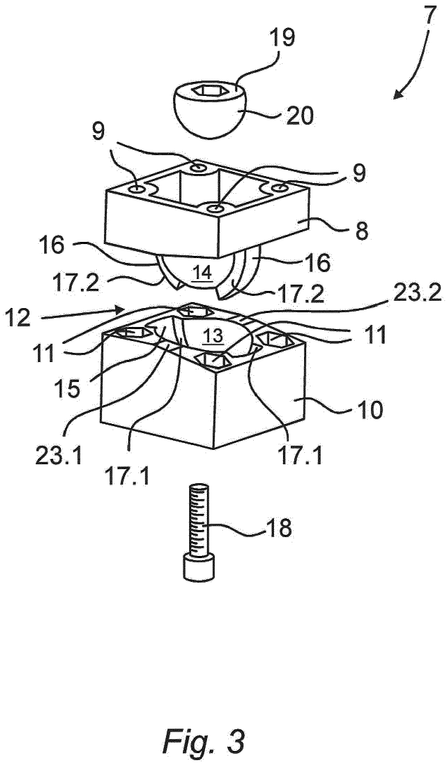

In Fig. 3 bis Fig. 5 ist eine spezielle Ausführungsform der Befestigungsvorrichtung 7 in Alleinstellung gezeigt. Diese Befestigungsvorrichtung 7 weist einen ersten Anschlusskörper 8 auf, der ausgebildet ist, zum starren Verbinden des ersten Anschlusskörpers 8 der Befestigungsvorrichtung 7 mit der Leitungsführungsvorrichtung 4. Dazu weist der erste Anschlusskörper 8 wenigstens eine, im Falle des vorliegenden Ausführungsbeispiels vier Durchgangsöffnungen 9 auf. In die Durchgangsöffnungen 9 sind nicht näher dargestellte Schrauben, beispielsweise mit ihren Schraubenköpfen nach oben ausgerichtet, einsteckbar, so dass die Gewindeabschnitte der Schrauben entweder direkt an die Leitungsführungsvorrichtung 4 bzw. dessen Gehäuse anschraubbar sind, oder beispielsweise durch eine Wand des Gehäuses hindurchsteckbar und endseitig mit einer separaten Mutter angeschraubt werden können. Für eine drehfeste Aufnahme der Schraubenköpfe oder von separaten Muttern können die Durchgangsöffnungen 9 Endbereiche mit beispielsweise einer sechseckigen Umfangskontur aufweisen, so dass bei einem endseitigen Aufdrehen von Muttern auf die Schraube, der jeweilige Schraubenkopf sich nicht mitdreht, sondern formschlüssig in der Durchgangsöffnung 9 gehalten ist oder eine eingesetzte Mutter sich nicht mitdreht, wenn die Schraube gedreht wird, sondern formschlüssig in der Durchgangsöffnung 9 gehalten ist.

Die Befestigungsvorrichtung 7 weist außerdem einen zweiten Anschlusskörper 10 auf, der ausgebildet ist, zum starren Verbinden des zweiten Anschlusskörpers 10 der Befestigungsvorrichtung 7 mit einem der Glieder 2 des Roboterarms 1. Dazu weist der zweite Anschlusskörper 10 wenigstens eine, im Falle des vorliegenden Ausführungsbeispiels vier Durchgangsöffnungen 11 auf. In die Durchgangsöffnungen 11 sind nicht näher dargestellte Schrauben, beispielsweise mit ihren Schraubenköpfen nach oben ausgerichtet, einsteckbar, so dass die Gewindeabschnitte der Schrauben entweder direkt in einen Sitz an einem Glied 2 des Roboterarms 1 anschraubbar sind, oder beispielsweise durch eine Tragplatte hindurchsteckbar und endseitig mit einer separaten Mutter angeschraubt werden können. Für eine drehfeste Aufnahme der Schraubenköpfe oder von separaten Muttern können die Durchgangsöffnungen 11 Endbereiche mit beispielsweise einer sechseckigen Umfangskontur aufweisen, so dass bei einem endseitigen Aufdrehen von Muttern auf die Schraube, der jeweilige Schraubenkopf sich nicht mitdreht, sondern formschlüssig in der Durchgangsöffnung 9 gehalten ist oder eine eingesetzte Mutter sich nicht mitdreht, wenn die Schraube gedreht wird, sondern formschlüssig in der Durchgangsöffnung 11 gehalten ist.

Die Befestigungsvorrichtung 7 weist erfindungsgemäß ein Gelenk 12 auf, das ausgebildet ist, den zweiten Anschlusskörper 10 relativ zum ersten Anschlusskörper 8 in zwei verschiedenen, jeweils senkrecht zur Auszugsrichtung A orientierten Drehfreiheitsgraden D1 und D2 beweglich zu lagern.

Im Falle des vorliegenden Ausführungsbeispiels weist der zweite Anschlusskörper 10 eine Kugelpfanne 13 auf und der erste Anschlusskörper 8 weist zur Bildung eines Kugelgelenks der Befestigungsvorrichtung 7 einen mit der Kugelpfanne 13 des zweiten Anschlusskörpers 10 zusammenwirkenden Kugelabschnitt 14 auf.

Dabei weist die Kugelpfanne 13 eine Innenwand auf, die mit einer Kulissenführung 15 versehen ist und der Kugelabschnitt 14 weist eine Außenwand auf, die mit einer in die Kulissenführung 15 eingreifenden Gegenführung 16 versehen ist, wobei die Kulissenführung 15 und die Gegenführung 16 ausgebildet sind, im Falle des vorliegenden Ausführungsbeispiels einen Kippwinkel D2 des Kugelgelenks zu begrenzen.

Dazu wird die Kulissenführung 15 der Kugelpfanne 13 im Falle des vorliegenden Ausführungsbeispiels von einer nutförmigen Vertiefung gebildet, die sich bogenförmig in der Innenwand der Kugelpfanne 13, wie in Fig. 3 bis Fig. 5 dargestellt, erstreckt und die Gegenführung 16 des Kugelabschnitts 14 wird von einem Nutvorsprung gebildet, der sich bogenförmig auf der Außenwand des Kugelabschnitts 14, wie in Fig. 3 bis Fig. 5 dargestellt, erstreckt.

Der erste Anschlusskörper 8 ist im Falle des vorliegenden Ausführungsbeispiels mit dem zweiten Anschlusskörper 10 mittels einer den ersten Anschlusskörper 8 und den zweiten Anschlusskörper 10 durchdringenden Schraube 18 gelenkig verbunden und durch eine mit der Schraube 18 zusammenwirkende Mutter 19 gegen Auseinanderfallen gesichert ist.

Die Mutter 19 weist ist im Falle des vorliegenden Ausführungsbeispiels eine Kugelsitzfläche 20 auf, die dem ersten Anschlusskörper 8 zugewandt ist, der den Kugelabschnitt 14 aufweist. Eine dem Kugelabschnitt 14 abgewandte, rückwandige Oberfläche des ersten Anschlusskörpers 8 weist eine der Kugelsitzfläche 20 der Mutter 19 korrespondierende Gestalt in Form einer konkaven Kugelwand auf, so dass einerseits die Kugelsitzfläche 20 der Mutter 19 darin formgenau Platz findet und andererseits die Wanddicke des ersten Anschlusskörpers 8 zwischen der konkaven Kugelwand und dem Kugelabschnitt 14 zumindest weitgehend oder sogar genau eine gleichmäßige Wandstärke aufweist.

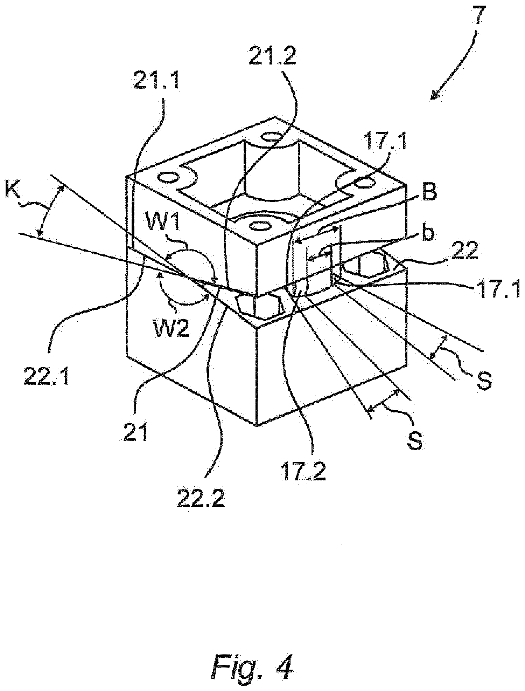

Eine Begrenzung des Schwenkwinkels S der Kulissenführung 15 relativ zur Gegenführung 16 ist, wie insbesondere in Fig. 4 ersichtlich, durch gegenüberliegende Seitenwände 17.1 und 17.2 der Kulissenführung 15 und der Gegenführung 16 vorgegeben. Die in die Kulissenführung 15 eingreifende Gegenführung 16 weist dazu eine den Schwenkwinkel S bestimmende, geringere Breite b auf, als die Breite B der Kulissenführung 15.

Zur Realisierung des Kippwinkels K weist der erste Anschlusskörper 8 eine auf den zweiten Anschlusskörper 10 zuweisende erste Sitzfläche 21 auf und der zweite Anschlusskörper 10 weist eine auf den ersten Anschlusskörper 8 zuweisende zweite Sitzfläche 22 auf, wobei die erste Sitzfläche 21 des ersten Anschlusskörpers 8 zwei zueinander in einem Winkel W1 angestellte erste Teilsitzflächen 21.1 und 21.2 aufweist. Die zweite Sitzfläche 22 des zweiten Anschlusskörpers 10 weist zwei zueinander in einem Winkel W2 angestellte zweite Teilsitzflächen 22.1 und 22.2 auf, derart, dass die aufeinander abkippende erste Sitzfläche 21 und zweite Sitzfläche 22 den zweiten Drehfreiheitsgrade D2 für das Kippen bildet.

Eine Begrenzung des Kippwinkels K der aufeinander abkippenden ersten Sitzfläche 21 und zweiten Sitzfläche 2 ist demgemäß durch den Anstellungswinkel W1 der ersten Teilsitzflächen 21.1 und 21.2 des ersten Anschlusskörpers 8 und durch den Anstellungswinkel W2 der zweiten Teilsitzflächen 22.1 und 22.2 des zweiten Anschlusskörpers 22 vorgegeben, indem die aufeinander abkippenden Anschlusskörper 8 und 10 den maximalen Kippwinkel K bestimmenden.

In Fig. 3 sind die Auflageflächen 23.1 und 23.2 gezeigt. Der dritte Drehfreiheitsgrad ist bei der erfindungsgemäßen Befestigungsvorrichtung 7 mittels der Auflageflächen 23.1 und 23.2 blockiert. Die Auflageflächen 23.1 und 23.2 liegend an der Kugelpfanne 13 gegenüber und sind jeweils zwischen den beiden Teilsitzflächen 22.1 und 22.2 (Fig.4) des zweiten Anschlusskörpers 10 angeordnet.

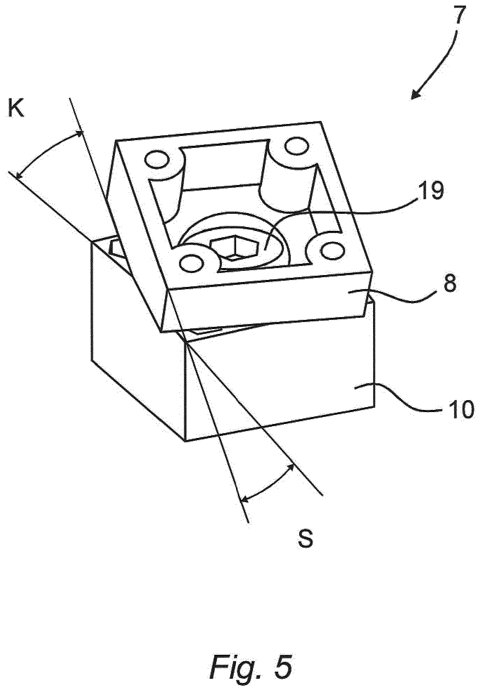

Die Fig. 5 zeigt die Befestigungsvorrichtung 7 abschließend in einer in den beiden Drehfreiheitsgraden D1 und D2 verstellten Auslenkungsstellung mit einer gegenüber der Grundstellung gemäß Fig. 3 und Fig. 4 um den maximalen Kippwinkel K abgekippten und um den maximalen Schwenkwinkel S geschwenkten Lage.

### Bezugszeichenliste

- 1: Roboterarm
- 2: Glieder
- 3: Gelenk
- 4: Leitungsführungsvorrichtung
- 5: Aufnahmeraum
- 6: Energiezuführungsleitung
- 6.1: Leitungsabschnitt
- 6.2: Leitungsende
- 7: Befestigungsvorrichtung
- 8: Anschlusskörper
- 9: Durchgangsöffnung
- 10: Anschlusskörper
- 11: Durchgangsöffnung
- 12: Gelenk
- 13: Kugelpfanne
- 14: Kugelabschnitt
- 15: Kulissenführung
- 16: Gegenführung
- 18: Schraube
- 19: Mutter
- 20: Kugelsitzfläche
- 21: erste Sitzfläche
- 22: zweite Sitzfläche
- 23.1: Auflagefläche
- 23.2: Auflagefläche

## Patentansprüche

1. Befestigungsvorrichtung für eine Leitungsführungsvorrichtung (4), die einen Aufnahmeraum (5) aufweist, in dem ein Leitungsabschnitt (6.1) in einer Auszugsrichtung (A) ausziehbar gelagert ist, zur Lagerung der Leitungsführungsvorrichtung (4) an einem Roboterarm (1) mit mehreren Gliedern (2) und die Glieder (2) gegeneinander verstellenden Gelenken (3), umfassend:
- einen ersten Anschlusskörper (8), der ausgebildet ist, zum starren Verbinden des ersten Anschlusskörpers (8) der Befestigungsvorrichtung (7) mit einer Leitungsführungsvorrichtung (4),
- einen zweiten Anschlusskörper (10), der ausgebildet ist, zum starren Verbinden des zweiten Anschlusskörpers (10) der Befestigungsvorrichtung (7) mit einem Glied (2) eines Roboterarms (1), und
- ein Gelenk (12), das ausgebildet ist, den zweiten Anschlusskörper (10) relativ zum ersten Anschlusskörper (8) in zwei verschiedenen, jeweils senkrecht zur Auszugsrichtung (A) orientierten Drehfreiheitsgraden (D1, D2) beweglich zu lagern **dadurch gekennzeichnet, dass**
der erste Anschlusskörper (8) eine auf den zweiten Anschlusskörper (10) zuweisende erste Sitzfläche (21) aufweist und der zweite Anschlusskörper (10) eine auf den ersten Anschlusskörper (8) zuweisende zweite Sitzfläche (22) aufweist, wobei die erste Sitzfläche (21) des ersten Anschlusskörpers (8) zwei zueinander in einem Winkel angestellte erste Teilsitzflächen (21.1, 21.2) aufweist und/oder die zweite Sitzfläche (22) des zweiten Anschlusskörpers (10) zwei zueinander in einem Winkel angestellte zweite Teilsitzflächen (22.1, 22.2) aufweist, derart, dass die aufeinander abkippende erste Sitzfläche (21) und zweite Sitzfläche (22) einen der beiden Drehfreiheitsgrade (D1, D2) bestimmt.

2. Befestigungsvorrichtung nach Anspruch 1, **dadurch gekennzeichnet, dass** der erste Anschlusskörper (8) eine Kugelpfanne (13) aufweist und der zweite Anschlusskörper (10) zur Bildung eines Kugelgelenks der Befestigungsvorrichtung (7) einen mit der Kugelpfanne (13) des ersten Anschlusskörpers (8) zusammenwirkenden Kugelabschnitt (14) aufweist.

3. Befestigungsvorrichtung nach Anspruch 1, **dadurch gekennzeichnet, dass** der zweite Anschlusskörper (10) eine Kugelpfanne (13) aufweist und der erste Anschlusskörper (8) zur Bildung eines Kugelgelenks der Befestigungsvorrichtung (7) einen mit der Kugelpfanne (13) des zweiten Anschlusskörpers (10) zusammenwirkenden Kugelabschnitt (14) aufweist.

4. Befestigungsvorrichtung nach Anspruch 2 oder 3, **dadurch gekennzeichnet, dass** die Kugelpfanne (13) eine Innenwand aufweist, die mit einer Kulissenführung (15) versehen ist und der Kugelabschnitt (14) eine Außenwand aufweist, die mit einer in die Kulissenführung (15) eingreifenden Gegenführung (16) versehen ist, wobei die Kulissenführung (15) und die Gegenführung (16) ausgebildet sind, einen Schwenkwinkel (S) oder einen Kippwinkel (K) des Kugelgelenks zu begrenzen.

5. Befestigungsvorrichtung nach Anspruch 4, **dadurch gekennzeichnet, dass** die Kulissenführung (15) der Kugelpfanne (13) von einer nutförmigen Vertiefung gebildet wird, die sich bogenförmig in der Innenwand der Kugelpfanne (13) erstreckt und die Gegenführung (16) des Kugelabschnitts (14) von einem Nutvorsprung gebildet wird, der sich bogenförmig auf der Außenwand des Kugelabschnitts (14) erstreckt.

6. Befestigungsvorrichtung nach Anspruch 4 oder 5, **dadurch gekennzeichnet, dass** eine Begrenzung des Schwenkwinkels (S) oder des Kippwinkels (K) der Kulissenführung (15) relativ zur Gegenführung (16) durch gegenüberliegende Seitenwände (17.1, 17.2) der Kulissenführung (15) und der Gegenführung (16) vorgegeben ist, indem die in die Kulissenführung (15) eingreifende Gegenführung (16) eine den Schwenkwinkel (S) oder den Kippwinkel (K) bestimmende, geringere Breite (b) aufweist, als die Breite (B) der Kulissenführung (15).

7. Befestigungsvorrichtung nach einem der Ansprüche 1 bis 6, **dadurch gekennzeichnet, dass** eine Begrenzung des Schwenkwinkels (S) oder des Kippwinkels (K) der aufeinander abkippenden ersten Sitzfläche (21) und zweiten Sitzfläche (22) durch den Anstellungswinkel (W1) der ersten Teilsitzflächen (21.1, 21.2) des ersten Anschlusskörpers (8) und/oder durch den Anstellungswinkel (W2) der zweiten Teilsitzflächen (22.1, 22.2) des zweiten Anschlusskörpers (10) vorgegeben ist, indem die aufeinander abkippenden ersten Anschlusskörper (8) und zweiten Anschlusskörper (10) den maximalen Schwenkwinkel (S) oder den maximalen Kippwinkel (K) bestimmen.

8. Befestigungsvorrichtung nach einem der Ansprüche 1 bis 7, **dadurch gekennzeichnet, dass** der erste Anschlusskörper (8) mit dem zweiten Anschlusskörper (10) mittels einer den ersten Anschlusskörper (8) und den zweiten Anschlusskörper (10) durchdringenden Schraube (18) gelenkig verbunden und durch eine mit der Schraube (18) zusammenwirkende Mutter (19) gegen Auseinanderfallen gesichert ist.

9. Befestigungsvorrichtung nach Anspruch 8, **dadurch gekennzeichnet, dass** die Mutter (19) eine Kugelsitzfläche (20) aufweist, die demjenigen Anschlusskörper (8, 10) zugewandt ist, der den Kugelabschnitt (14) aufweist.

10. Roboterarm, aufweisend mehrere Glieder (2) und die Glieder (2) gegeneinander verstellende Gelenke (3), sowie eine Leitungsführungsvorrichtung (4), die einen Aufnahmeraum (5) aufweist, in dem ein Leitungsabschnitt (6.1) einer Energiezuführungsleitung (6) in einer Auszugsrichtung (A) ausziehbar gelagert ist, zum Führen der Energiezuführungsleitung (6) entlang mehrerer der Glieder (2) des Roboterarms (1), **dadurch gekennzeichnet, dass** der Roboterarm (1) eine Befestigungsvorrichtung (7) nach einem der Ansprüche 1 bis 9 aufweist, welche die Leitungsführungsvorrichtung (4), insbesondere ein Gehäuse der Leitungsführungsvorrichtung (4) in zwei verschiedenen, jeweils senkrecht zur Auszugsrichtung (A) des Leitungsabschnitts (6.1) der Energiezuführungsleitung (6) orientierten Drehfreiheitsgraden (D1, D2) beweglich an einem Glied (2) des Roboterarms (1) lagert.

11. Roboterarm nach Anspruch 10, **dadurch gekennzeichnet, dass** die Befestigungsvorrichtung (7) unmittelbar an einem Glied (2) des Roboterarms (1) montiert ist.

12. Roboterarm nach Anspruch 10, **dadurch gekennzeichnet, dass** die Befestigungsvorrichtung (7) an einer auf einem der Glieder (2) des Roboterarms (1) befestigten Tragplatte montiert ist.

## Claims

1. Fastening device for a line routing device (4) which has a receiving space (5) in which a line section (6.1) is mounted so that it can be pulled out in a pull-out direction (A), for mounting the line routing device (4) on a robot arm (1) with several Links (2) and the links (2) mutually adjusting joints (3), comprising:
- A first connection body (8) which is designed to rigidly connect the first connection body (8) of the fastening device (7) to a line routing device (4),
- A second connection body (10) which is designed to rigidly connect the second connection body (10) of the fastening device (7) to a link (2) of a robot arm (1), and
- A joint (12) which is designed to mount the second connection body (10) so as to be movable relative to the first connection body (8) in two different degrees of freedom of rotation (D1, D2), each oriented perpendicular to the extension direction (A)
**characterized in that**
the first connection body (8) has a first seat surface (21) facing the second connection body (10) and the second connection body (10) has a second seat surface (22) facing the first connection body (8), the first seat surface (21 ) of the first connection body (8) has two first partial seat surfaces (21.1, 21.2) which are positioned at an angle to one another
and / or
the second seat surface (22) of the second connection body (10) has two second partial seat surfaces (22.1, 22.2) which are positioned at an angle to one another, in such a way that the first seat surface (21) and second seat surface (22), which tilt over one another, determine one of the two degrees of freedom of rotation (D1, D2).

2. Fastening device according to claim 1, **characterized in that** the first connection body (8) has a ball socket (13) and the second connection body (10) to form a ball joint of the fastening device (7) one with the ball socket (13) of the first connection body (8) has cooperating spherical section (14).

3. Fastening device according to claim 1, **characterized in that** the second connection body (10) has a ball socket (13) and the first connection body (8) to form a ball joint of the fastening device (7) one with the ball socket (13) of the second connection body (10) having cooperating spherical section (14).

4. Fastening device according to claim 2 or 3, **characterized in that** the ball socket (13) has an inner wall which is provided with a link guide (15) and the ball section (14) has an outer wall which is connected to a link guide (15) engaging counter-guide (16) is provided, wherein the link guide (15) and the counter-guide (16) are designed to limit a pivot angle (S) or a tilt angle (K) of the ball joint.

5. Fastening device according to claim 4, **characterized in that** the link guide (15) of the ball socket (13) is formed by a groove-shaped recess which extends in an arc shape in the inner wall of the ball socket (13) and the counter-guide (16) of the ball section (14) is formed by a groove projection which extends arcuately on the outer wall of the spherical section (14).

6. Fastening device according to claim 4 or 5, **characterized in that** a limitation of the pivot angle (S) or the tilt angle (K) of the link guide (15) relative to the counter guide (16) by opposite side walls (17.1, 17.2) of the link guide (15) and the counter-guide (16) is predetermined by the counter-guide (16) engaging in the link guide (15) having a smaller width (b) that determines the pivot angle (S) or the tilt angle (K) than the width (B) of the Link guide (15).

7. Fastening device according to one of claims 1 to 6, **characterized in that** a limitation of the pivot angle (S) or the tilt angle (K) of the tilting first seat surface (21) and second seat surface (22) by the angle of incidence (W1) of the first Partial seat surfaces (21.1, 21.2) of the first connection body (8) and/or by the angle of incidence (W2) of the second partial seat surfaces (22.1, 22.2) of the second connection body (10) by the tilting first connection body (8) and second connection body (10) determine the maximum swivel angle (S) or the maximum tilt angle (K).

8. Fastening device according to one of claims 1 to 7, **characterized in that** the first connection body (8) is hingedly connected to the second connection body (10) by means of a screw (18) penetrating the first connection body (8) and the second connection body (10) and is secured against falling apart by a nut (19) cooperating with the screw (18).

9. Fastening device according to claim 8, **characterized in that** the nut (19) has a spherical seat surface (20) which faces that connection body (8, 10) which has the spherical section (14).

10. Robotic arm, comprising several links (2) and the links (2) mutually adjusting joints (3), as well as a line guiding device (4) which has a receiving space (5) in which a line section (6.1) of an energy supply line (6) is mounted extendable in a pull-out direction (A), for guiding the energy supply line (6) along several of the links (2) of the robot arm (1), **characterized in that** the robot arm (1) has a fastening de-vice (7) according to one of claims 1 to 9, which the line routing device (4), in par-ticular a housing of the line routing device (4), can be moved in two different de-grees of freedom (D1, D2) of rotation on a member, each perpendicular to the ex-tension direction (A) of the line section (6.1) of the power supply line (6) (2) of the robot arm (1).

11. Robot arm according to claim 10, **characterized in that** the fastening device (7) is mounted directly on a member (2) of the robot arm (1).

12. Robot arm according to claim 10, **characterized in that** the fastening device (7) is mounted on a support plate fastened to one of the links (2) of the robot arm (1).

## Revendications

1. Dispositif de fixation pour un dispositif d'acheminement de câbles (4) qui présente un logement de réception (5) dans lequel un tronçon de câble (6.1) est monté de manière à pouvoir être retiré dans le sens d'extraction (A), pour le montage du dispositif d'acheminement de ligne (4) sur un bras de robot (1) avec plusieurs maillons (2) et les maillons (2) s'ajustant mutuellement (3), comprenant :
- un premier corps de connexion (8) qui est destiné à relier rigidement le premier corps de connexion (8) du dispositif de fixation (7) à un dispositif d'acheminement de ligne (4),
- un deuxième corps de liaison (10) qui est destiné à relier rigidement le deuxième corps de liaison (10) du dispositif de fixation (7) à une liaison (2) d'un bras de robot (1), et
- une articulation (12) qui est destinée à monter le deuxième corps de connexion (10) de manière mobile par rapport au premier corps de connexion (8) selon deux degrés de liberté de rotation différents (D1, D2), chacun orienté perpendiculairement à le sens d'extension (A)
**caractérisé**
**en ce que** le premier corps de connexion (8) a une première surface de siège (21) tournée vers le deuxième corps de connexion (10) et le deuxième corps de connexion (10) a une deuxième surface de siège (22) tournée vers le premier corps de connexion (8), le premier la surface d'assise (21 ) du premier corps de connexion (8) présente deux premières surfaces d'assise partielles (21.1, 21.2) qui sont positionnées à un angle l'une par rapport à l'autre et/ou la deuxième surface d'assise (22) du deuxième corps de connexion (10 ) présente deux deuxièmes surfaces d'assise partielles (22.1, 22.2) qui sont disposées en biais l'une par rapport à l'autre , de telle sorte que la première surface d'assise (21) et la deuxième surface d'assise (22), qui s'inclinent l'une sur l'autre, déterminent une des deux degrés de liberté de rotation (D1, D2).

2. Dispositif de fixation selon la revendication 1, **caractérisé en ce que** le premier corps de liaison (8) présente une rotule (13) et le deuxième corps de liaison (10) pour former une rotule du dispositif de fixation (7) solidaire de la rotule la douille (13) du premier corps de connexion (8) a une section sphérique coopérante (14).

3. Dispositif de fixation selon la revendication 1, **caractérisé en ce que** le deuxième corps de liaison (10) présente une rotule (13) et le premier corps de liaison (8) pour former une rotule du dispositif de fixation (7) solidaire de la rotule douille (13) du deuxième corps de connexion (10) ayant une section sphérique coopérante (14).

4. Dispositif de fixation selon la revendication 2 ou 3, **caractérisé en ce que** la rotule (13) a une paroi interne qui est munie d'un guide de liaison (15) et la section de rotule (14) a une paroi externe qui est reliée à un un guide de liaison (15) engageant un contre-guide (16) est prévu, le guide de liaison (15) et le contre-guide (16) étant conçus pour limiter un angle de pivotement (S) ou un angle d'inclinaison (K) de la bille découper.

5. Dispositif de fixation selon la revendication 4, **caractérisé en ce que** le guide de liaison (15) de la rotule (13) est formé par un évidement en forme de rainure qui s'étend en arc de cercle dans la paroi interne de la rotule (13) et le contre-guide (16) de la section sphérique (14) est formé par une saillie de rainure qui s'étend en arc de cercle sur la paroi extérieure de la section sphérique (14).

6. Dispositif de fixation selon la revendication 4 ou 5, **caractérisé en ce qu'**une limitation de l'angle de pivotement (S) ou de l'angle d'inclinaison (K) du guide de liaison (15) par rapport au contre-guide (16) par des parois latérales opposées ( 17.1, 17.2) du guide de liaison (15) et du contre-guide (16) est prédéterminée par le contre-guide (16) s'engageant dans le guide de liaison (15) ayant une plus petite largeur (b) qui détermine l'angle de pivotement ( S) ou l'angle d'inclinaison (K) que la largeur (B) du guide Link (15).

7. Dispositif de fixation selon l'une des revendications 1 à 6, **caractérisé en ce qu'**une limitation de l'angle de pivotement (S) ou de l'angle d'inclinaison (K) de la première surface d'assise (21) et de la deuxième surface d'assise (22) inclinables par le angle d'incidence (W1) des premières surfaces d'assise partielles (21.1, 21.2) du premier corps de liaison (8) et/ou par l'angle d'incidence (W2) des deuxièmes surfaces d'assise partielles (22.1, 22.2) du deuxième corps de connexion (10) par le premier corps de connexion basculant (8) et le deuxième corps de connexion (10) déterminent l'angle de pivotement maximal (S) ou l'angle d'inclinaison maximal (K).

8. Dispositif de fixation selon l'une des revendications 1 à 7, **caractérisé en ce que** le premier corps de connexion (8) est lié de manière articulée au deuxième corps de connexion (10) au moyen d'une vis (18) pénétrant dans le premier corps de connexion (8) et le deuxième corps de connexion (10) et est sécurisé contre la chute par un écrou (19) coopérant avec la vis (18).

9. Dispositif de fixation selon la revendication 8, **caractérisé en ce que** l'écrou (19) présente une surface d'appui sphérique (20) qui fait face au corps de liaison (8, 10) qui présente la section sphérique (14).

10. Bras robotique, comprenant plusieurs maillons (2) et les maillons (2) s'ajustant mutuellement (3), ainsi qu'un dispositif de guidage de ligne (4) qui présente un espace de réception (5) dans lequel un tronçon de ligne (6.1) d'une ligne d'alimentation en énergie (6) est monté extensible dans une direction d'extraction (A), pour guider la ligne d'alimentation en énergie (6) le long de plusieurs des liaisons (2) du bras de robot (1), **caractérisé en ce que** le le bras de robot (1) présente un dispositif de fixation (7) selon l'une des revendications 1 à 9, dans lequel le dispositif de routage de ligne (4), en particulier un boîtier du dispositif de routage de ligne (4), peut être déplacé de deux degrés différents de liberté (D1, D2) de rotation sur un élément, chacun perpendiculaire à la direction d'extension (A) du tronçon de ligne (6.1) de la ligne d'alimentation (6) (2) du bras de robot (1).

11. Bras de robot selon la revendication 10, **caractérisé en ce que** le dispositif de fixation (7) est monté directement sur un élément (2) du bras de robot (1).

12. Bras de robot selon la revendication 10, **caractérisé en ce que** le dispositif de fixation (7) est monté sur une plaque support fixée sur l'une des liaisons (2) du bras de robot (1).
